# EUROPEAN PATENT SPECIFICATION

(11) **EP 1 678 845 B1**
(45) Date of publication and mention of the grant of the patent: **18.05.2011**
(21) Application number: 03785729.9
(22) Date of filing: 28.11.2003
(51) Int. Cl.: H04B 7/08, H04B 1/707

(54) **MULTIPLE ACCESS INTERFERENCE CANCELLATION**
MEHRFACHZUGRIFFSSTÖRUNGSUNTERDRÜCKUNG
ANNULATION D'INTERFERENCES D'ACCES MULTIPLE

(30) Priority: 31.10.2003 WO PCT/EP03/12163
(43) Date of publication of application: 12.07.2006
(73) Proprietor: Telefonaktiebolaget LM Ericsson (publ), 164 83 Stockholm (SE)
(72) Inventor: HAARTSEN, Jacobus, Cornelis, NL-7772 BG Hardenberg (NL)
(74) Representative: Dohmen, Johannes Maria Gerardus
(86) International application number: PCT/EP2003/013677
(87) International publication number: WO 2005/050869

(56) References cited:
- EP-A- 0 849 888
- EP-A- 1 267 497
- JONG WON PARK ET AL: "MULTIUSER DETECTION SCHEME USING ADAPTIVE ANTENNA ARRAY OVER RAYLEIGH FADING CHANNELS" VTC 2000-SPRING. 2000 IEEE 51ST. VEHICULAR TECHNOLOGY CONFERENCE PROCEEDINGS. TOKYO, JAPAN, MAY 15-18, 2000, IEEE VEHICULAR TECHNOLGY CONFERENCE, NEW YORK, NY: IEEE, US, vol. 3 OF 3. CONF. 51, 15 May 2000 (2000-05-15), pages 2157-2161, XP000968386 ISBN: 0-7803-5719-1
- GODARA L C: "ADAPTIVE POSTBEAMFORMER INTERFERENCE CANCELER WITH IMPROVED PERFORMANCE IN THE PRESENCE OF BROADBAND DIRECTIONAL SOURCES" JOURNAL OF THE ACOUSTICAL SOCIETY OF AMERICA, AMERICAN INSTITUTE OF PHYSICS. NEW YORK, US, vol. 89, no. 1, 1991, pages 266-273, XP000178910 ISSN: 0001-4966

## Description

### Field of the Invention

The present invention relates generally to wireless radio communication systems and, more specifically, to signal processing in the radio access units or base stations of wireless radio communication systems for interference cancellation.

### Background of the Invention

In the last decades, progress in radio and VLSI (Very Large Scale Integration) technology has fostered widespread use of radio communications in consumer applications. Portable devices, such as portable radios, mobile radio communication units, and the like can now be produced having acceptable costs, size and power consumption.

Mobile telephone communications for the consumer market started with cellular telephone systems derived from the police and rescue services, based on an analog technology improved and optimized in the seventies and eighties. Examples of these early analog mobile telephone systems are indicated by the acronyms NMT and TACS.

Typically, cellular communication systems comprise a plurality of mobile or portable radio communication units and a plurality of radio access units or base stations. Each access unit provides a number of radio communication channels to a geographically limited area, called a communication cell, defined by the operating ranges of a particular radio access unit. The radio access units connect to a central interface unit, also called Radio Exchange (RE) or Mobile Telephone Switching Office (MTS0). The RE or MTS0, in turn, connects to a Public Switched Telephone Network (PSTN) or Integrated Services Digital Network (ISDN) for completing calls between mobile radio users and landline subscribers. A call of a mobile radio user is handed over from cell to cell while the user moves in the coverage area of the radio communication system.

The usage of cellular mobile telephones really took off in the nineties, by the introduction of mobile, telephone systems based on digital technology, known under the acronyms GSM, D-AMPS (US-TDMA or IS-136), IS-95 and PDC. Extensions to GSM (also to be applied in D-AMPS) like EDGE have been introduced to improve the data rate on the digital air interfaces.

Generally, the analog systems are indicated as being the first generation, whereas the digital systems are indicated as second generation. Recently, third generation cellular systems have been developed, indicated by the acronyms UMTS, IMT-2000, CDMA2000, featuring larger transmission bandwidths.

While deploying the different systems, extensive work has been carried out to increase the capacity of the systems. Since licensed RF spectrum is in use, the more users the operator can accommodate per MHz-bandwidth, the more efficient he uses his precious and scarce resources, thereby improving his revenues.

A known method of increasing transmission capacity is by applying directional antennas. Early radio communication systems already applied the technique of sectorization, wherein a communication cell is divided into segments of 60 or 120 degrees, each segment covered by a directional antenna beam. In principle, this relates to cell splitting with the nice advantage that no additional radio access sites have to be built: one omni-directional antenna of a communication cell is replaced by six or three directional antennas mounted on the same site installation.

More advanced systems make use of radio access units having adaptive or smart antennas, which can steer the antenna beam towards the mobile user. As the mobile radio user moves, a tracking mechanism is applied in order to keep the beam pointing towards the mobile user. In addition to pointing the beam to the desired user, nulls can be steered towards interfering users such that their signals are greatly suppressed by the antenna diagram. However, when the angle of arrival between the intended and interfering signal is rather small, no optimal setting can be found.

In other cellular communication systems, extensive use is made of adaptive antennas. The capacity of a cellular telephone system is greatly improved by applying Space Division Multiple Access (SDMA). In SDMA, the communication channel is formed by a fixed geographical area: only from this area, signals can arrive.

In advanced cellular systems, adaptive antennas are used the antenna patterns of which can be updated dynamically to define the area covered. In this case, the geographical area is not fixed, but depends on the mobile user position relative to the base station position.

Other mechanisms applied to increase the capacity comprise joint demodulation. By demodulating interferers and taking them into account while demodulating the desired signal, the demodulation can be greatly improved. Because the system can then operate under lower SNR conditions, the capacity of the system increases.

European patent application EP 1 267 497, which is considered the most pertinent prior art of record, discloses a multi-user interference cancellation method and apparatus by adaptively updating antenna weights in a plurality of cascaded interference estimation units, for processing user signals received at a plurality of antennas.

Each interference estimation unit has a plurality of processing stages. In a first stage, each interference estimation unit generates and outputs interference and symbol replicas of each user signal from the signals received at the plurality of antennas using the adaptive antenna weights.

Computation means subtract the interference replicas from the signals received by the plurality of antennas and provide the subtraction results to the subsequent stage of an interference cancellation unit. In each subsequent stage each of the symbol replicas of the previous stage is converted into antenna signals. Residue signals from the computation means are added to the converted antenna signals and from the results of this addition the antenna weights are adaptively updated in an antenna-weight updating section.

### Summary of the Invention

It is the object of the present intention to improve interference cancellation in a radio communication system, wherein joint demodulation is applied in radio access units using adaptive antennas.

According to the invention, in a first aspect thereof, there is provided a method of interference cancellation in radio communication signals received by a radio access unit of a radio communication system. The antenna means comprise a plurality of directionally separated antenna elements for adaptively receiving radio communication signals transmitted by a plurality of remote radio communication units. The method comprises the steps of
a) obtaining radio signals received by each of the antenna elements, and is characterized by the further steps of:
b) determining first weighing factors for selecting radio signals of a first radio communication unit among the radio signals obtained in step a);
c) weighing the radio signals obtained in step a) by the first weighing factors providing a first radio signal of the first radio communication unit;
d) determining second weighing factors for selecting radio signals of a second radio communication unit among the radio signals obtained in step a);
e) weighing the radio signals obtained in step a) by the second weighing factors providing a second radio signal of the second radio communication unit;
f) subtracting from the second radio signal provided in step e) the first radio signal provided in step c) weighed by the second weighing factors, providing a corrected second radio signal, and
g) repeating steps d) to f) for a further radio communication unit by determining further weighing factors, providing a further radio signal of the further radio communication unit and providing a corrected further radio signal by each time subtracting from the further radio signal the previously obtained corrected radio signals weighed by the further weighing factors, till a stop criterium has been satisfied.

The invention is based on successively removing interferers from the total received signal, which is also denoted as subtractive cancellation. In accordance with the invention, among the radio signals received by the antenna elements, a first radio signal corresponding to a first radio communication unit is determined using first weighing factors associated with the first radio communication unit.

Next, the radio signal of a second radio communication unit is provided, using second weighing factors associated with the second radio communication unit. However, since the first radio signal is known, part of the first radio signal included as interference in the second radio signal can now be removed from the second radio signal by weighing the first radio signal with the second weighing factors and subtracting the weighed result from the second radio signal, resulting in a corrected second radio signal.

By repeating the steps for a third radio communication unit using third weighing factors for obtaining a third radio signal from the total received radio signal, part of the first and second radio signals included as interference in the third radio signal can be removed by weighing the first radio signal and the corrected second radio signal using the third weighing factors and subtracting the weighed result from the third radio signal leaving a corrected third radio signal, and so on. The above steps can be repeated till a stop criterium has been met.

In accordance with a further embodiment of the invention, the stop criterium includes stopping of step g) once a corrected radio signal has been provided corresponding to a radio communication unit of interest.

However, if sufficient signal processing capacity and/or time are available, in accordance with a further embodiment of the invention, the stop criterium includes repetition of step g) for the first, second and further radio communication units till the interference cancellation in the first, second and further radio signals between successive repetitions of step g) drops below a set value.

That is, the signal processing is iterated several times, including provision of a corrected first radio signal by subtracting the interference parts of all the other radio signals properly weighed by the first weighing factors, till no improvement or no significant improvement determined by a set signal quality criterium or value is found. Proper quality criteria or values are known to the skilled person and may depend on the nature of the signals to be processed.

In a yet further embodiment of the invention, the stop criterium includes repetition of step g) during a set time period. This method can be used in combination with the previously disclosed stop method and is useful while processing speech signals, for example, for which strict time delay criteria have to be met.

The weighing factors, in accordance with an embodiment of the invention, are determined to represent conceptual antenna patterns with the plurality of directionally separated antenna elements. That is, the weighing factors are set such that an antenna pattern is formed pointing to a respective radio communication unit or covering the geographical area in which the radio communication unit is located. Note that no "mechanical" or actual beam forming, by controlling the antenna elements, is performed for selectively receiving the radio signal of a respective radio communication unit.

In an embodiment of the invention, the weighing factors are selected for optimally selecting radio signals of a respective radio communication unit and for optimally suppressing radio signals corresponding to any other radio communication unit. In antenna terms, the antenna pattern is constructed thus that the main beam points towards the respective communication unit, and radio signals of other communication units are suppressed as best as possible (null steering).

In a preferred embodiment of the invention, the radio signals obtained in step a) are ordered from strongest to weakest according to receive signal strength, and wherein the first, second and further radio communication units are selected in descending order of receive signal strength. That is, first the strongest radio signal is considered, next the second strongest, and so on till the weakest signal, if applicable.

Those skilled in the art will appreciate that, in general, the strongest radio signal will provide the greatest amount of interference in all the other radio signals. By first removing this source of interference, a first significant improvement will be achieved. Further less significant improvements will than be provided in next iteration steps, if applicable.

In a still further embodiment of the method according to the invention, the first, second and further corrected radio signals are demodulated into first, second and further demodulated signals, respectively, and stored in storage means. For providing the corrected radio signals the demodulated signals are than reconstructed into corresponding radio signals and weighed by the respective weighing factors and subtracted from the respective radio signal, for providing the corrected radio signal. The advantage of this embodiment is that the respective corrected radio signals need not to be stored but that the demodulated signals are used, which anyhow are required for communication purposes.

The method according to the invention is advantageously implemented in the digital domain, wherein the radio signals obtained in step a) are digitized and the steps b) to d) are performed in the digital domain by digital signal processing means. Also the demodulation and reconstruction may be advantageously performed in the digital domain by digital signal processing means.

In a further aspect of the invention there is provided a signal processing device for interference cancellation in radio communication signals received by a radio access unit of a radio communication system, wherein the radio access unit comprising receiver means and antenna means, the antenna means having a plurality of directionally separated antenna elements for adaptively receiving radio communication signals transmitted by a plurality of remote radio communication units, the device comprising
- means for storing radio signals received by each of the antenna elements, and is characterized by:
- means for determining respective weighing factors for selecting radio signals of a respective radio communication unit among the stored radio signals;
- means for weighing the stored radio signals by the respective weighing factors for providing a respective radio signal 1 of the respective radio communication unit; and
- means for subtracting from the respective radio signal previously determined corrected radio signals of radio communication units weighed by the respective weighing factors, for providing a corrected respective radio signal.

In a further embodiment of the invention, the means for determining respective weighing factors are arranged to represent conceptual antenna patterns with the plurality of directionally separated antenna elements. Preferably, the means for determining the respective weighing factors are arranged for selecting radio signals of a respective radio communication unit and for suppressing radio signals corresponding to any other radio communication unit.

In the preferred embodiment of the invention, the device comprises means for measuring signal strength of the stored radio signals, and means for ordering stored radio signals from strongest to weakest according to receive signal strength, and control means for processing the ordered radio signals in descending order of receive signal strength.

In another embodiment of the invention, the device comprises means for demodulating the respective corrected radio signals, further means for storing the demodulated signals, and means for reconstructing the demodulated signals providing corrected radio signals for weighing by the weighing means.

Means arranged for stopping signal processing in accordance with a stopping criterium may be arranged for stopping the signal processing:
- once a corrected radio signal has been provided corresponding to a radio communication unit of interest,
- till the interference cancellation between successive repetitions of providing a corrected respective radio signal drops below a set value, or
- after a set time period has lapsed.

Preferably, in a yet further embodiment of the invention, the signal processing device comprises analog to digital conversion means for digitizing the stored radio signals, and wherein the processing means are digital signal processing means. Demodulation means and reconstruction means, if applicable, are also advantageously implemented in the digital domain by digital signal processing means.

In a third aspect of the invention, there is provided a radio access unit for use in a radio communication system, the radio communication system comprising a plurality of remote radio communication units and at least one radio access unit, the radio access unit comprising a signal processing device disclosed above.

In a fourth aspect, the invention relates to a radio communication system, comprising a plurality of remote radio communication units and at least one radio access unit as disclosed above.

The above-mentioned and other features and advantage of the invention are illustrated in the following description with reference to the enclosed drawings.

### Brief Description of the Drawings

Fig. 1 shows, in a schematic and illustrative manner, a prior art sectorized system with fixed directional antennas covering 120-degrees segments.
Fig. 2 shows, in a schematic and illustrative manner, a prior art method of beam steering with adaptive antennas.
Fig. 3 shows, in a schematic and illustrative manner, prior art schematics of an adaptive antenna with antenna weights.
Fig. 4 shows, in a schematic and illustrative manner, an embodiment of a signal processing device according to the present invention.
Fig. 5 shows, in a schematic and illustrative manner, an example of a radio communication system, comprising a single radio access unit or base station and four radio communication units or mobile users, arranged in accordance with the present invention.
Figs. 6a, 6b and 6c show, in a schematic and illustrative manner, antenna patterns corresponding to selected weighing factors for a respective radio communication unit in the system of Fig. 5.
Fig. 7 shows a flow diagram of a preferred embodiment of the interference cancellation method according to the present invention.

### Detailed Description of the Embodiments

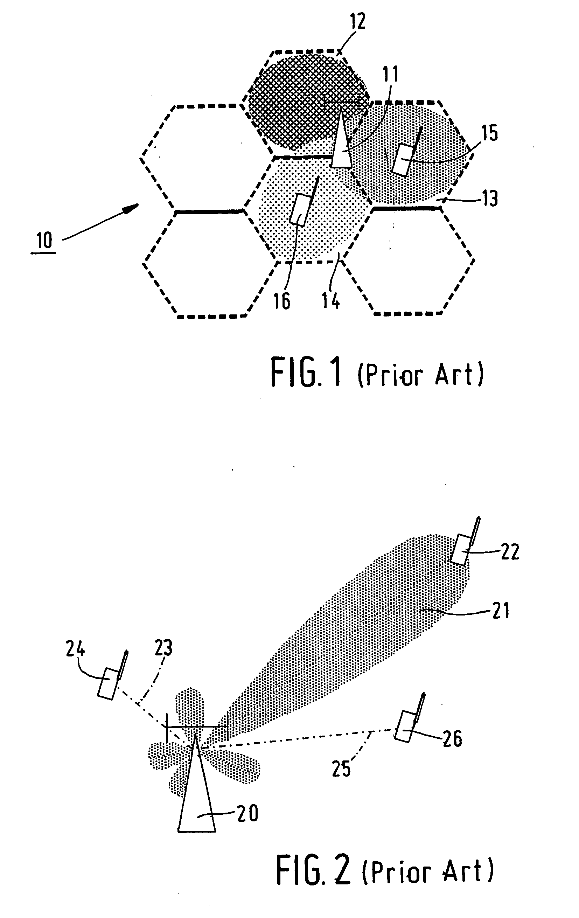

Fig. 1 shows a traditional, prior art cellular mobile radio communication system 10, comprising a base station or radio access unit site 11, depicted in the form of an antenna, providing radio coverage to a plurality of cells 12, 13 and 14. The radio coverage is indicated by a respective shading of the cells 12, 13 and 14. The system 10 is an example of a 120-degree sectorized radio coverage system. Mobile users or subscribers 15, 16 travelling in one of the cells 12, 13, 14, with their radio communication unit, will be in radio contact with the radio access unit 11.

More advanced radio systems, as shown in Fig. 2, make use of adaptive or smart antennas 20 which can steer the antenna beam 21 towards a mobile user 22. As the user moves, a tracking mechanism is applied in order to keep the antenna beam 21 pointing towards the mobile user 22. In addition to pointing the antenna beam 21 to the desired user 22, nulls 23, 25 can be steered towards interfering users 24, 26 respectively, such that their radio signals are greatly suppressed by the antenna characteristics.

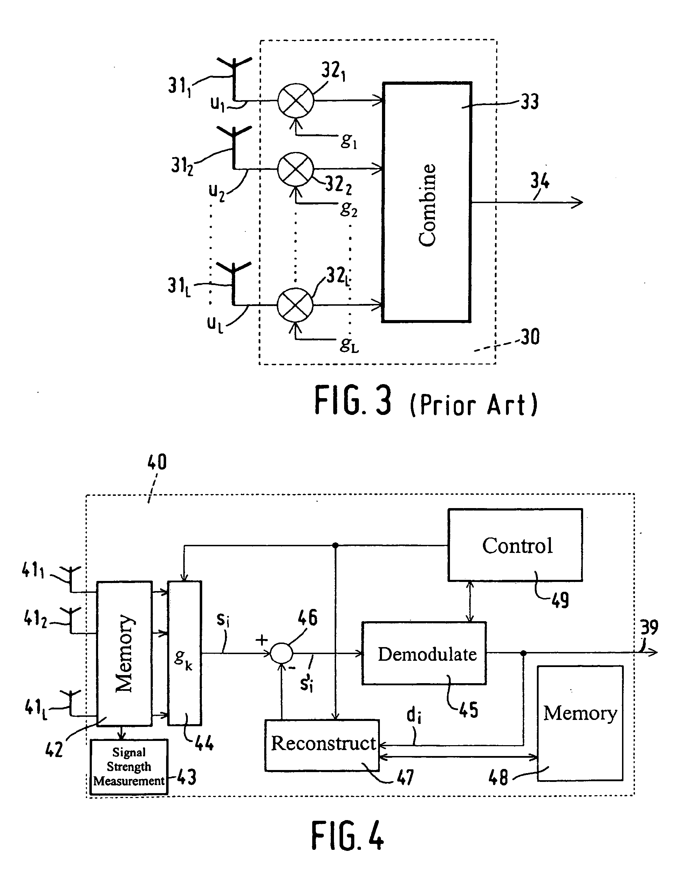

In Fig. 3, the basic structure of an adaptive antenna 30 is shown. The antenna 30 consists of a number of L directionally separated antenna elements 31ₖ, k = 1, 2, ... , L. The outputs of these antenna elements 31ₖ are fed into digital signal processing means 32ₖ, 33 where complex weights gₖ, are attributed to the antenna element radio signals Uₖ. By a proper choice of the complex weighing parameters gₖ, various antenna patterns can be set that favour the signal from an intended radio communication unit of a mobile user and suppress the signals from the interfering radio communication units. An antenna with L elements 31 only has L-1 degrees of freedom. The total number of antenna beams and nulls is limited to L-1. However, suppression may not result in complete removal of such interfering signals. In addition, when the angle of arrival between the intended and interfering signal is rather small, no optimal setting can be found.

With the present invention, the interferers are further suppressed by joint demodulation. For explaining the successive cancellation of interferers according to a preferred embodiment of the present invention, reference is now made to the structure of Fig. 4.

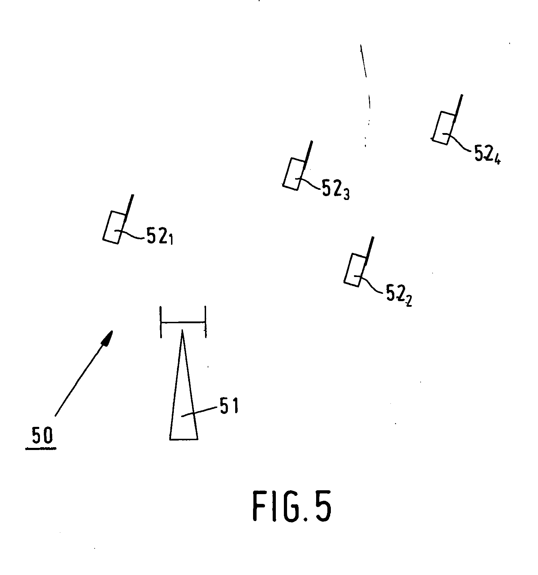

Unit 40 is a digital processing unit containing various means for performing signal processing in the digital domain and is located in or with a radio access unit 51 of a radio communication system 50, as disclosed in Fig. 5. Note that elements in the RF domain like receivers, transmitters, amplifiers, filters, mixers, analog-to digital converters, etc. have not been specifically depicted but are included by default, as will be appreciated by those skilled in the art.

Assume, as an example, the four user scenario shown in Fig. 5. The radio communication units 52₁, i = 1, 2, 3, 4 are ordered and numbered according to the signal strength received at a radio access unit, from strongest to weakest, according to receive signal strength measured by receive signal strength measurement means 43. The strongest user 1 comprises radio communication unit 52₁, the second strongest user 2 comprises radio communication unit 52₂, etc., and user 4 transmitting the weakest signal, viewed at the radio access unit 51, comprises radio communication unit 52₄. There is one intended mobile user, say user 3, having radio communication unit 52₃, and three interfering users 1, 2 and 4. Instead of separate measurement means 43, signal strength measurement may also be applied or implemented in control means 49.

First, the radio signals Uₖ, k = 1, 2, ... , L of all antenna elements 41ₖ are stored in signal memory means 42. Then, the antenna element radio signals Uₖ are successively demodulated, strongest to weakest, by demodulator means 45. Next, by control means 49, first weighing factors gₖ(1) for the strongest user 1 are calculated and provided by the control means 49 to signal weighing means 44. These first weighing factors gₖ(1) represent a conceptual antenna pattern with a main beam towards user 1 and all other users 2, 3 and 4 being suppressed as good as possible. Then the antenna element radio signals Uₖ are weighed by the first weighing factors gₖ(1) in the signal weighing means 44, which results in a first radio signal S₁ of the first radio communication unit 52₁.

For user 1 currently, there are no signals to subtract yet in the subtraction means 46, and the first radio signal S₁ of user 1 is demodulated by the demodulation means 45. The first demodulated signal d₁ for user 1 is provided at output 39 of the unit 40 and is stored in signal reconstruction means 47, comprising further memory means 48.

The next strongest user is user 2. New, second weighing factors gₖ(2) are determined by the control block 49 and implemented in the signal weighing means 44. The weighing factors are also fed to the signal reconstruction means 47. These second weighing factors represent a conceptual antenna pattern with a main beam towards user 2 and all other users 1, 3 and 4 being suppressed as good as possible. Then the antenna element radio signals Uₖ are weighed in the signal weighing means 44 by the second weighing factors gₖ(2), which results in a second radio signal S₂ of the second radio communication unit 52₂,

However, using the second weighing factors gₖ(2), the signal reconstruction means 47 can now determine what the contribution of user 1 will be to the second radio signal S₂, by applying the second weighing factors gₖ(2) on the reconstructed first demodulated radio, signal d₁, i.e. the first radio signal s₁. Note that the first radio signal s₁ is available from the further memory means 48.

This contribution of user 1 is now subtracted 46 from the second radio signal s₂ resulting in a corrected second radio signal s'₂ at the output of the subtraction means 46. The "cleaned" signal is then demodulated by the demodulation means 45, resulting in a demodulated signal d₂, provided at the output 39 of the unit 40. The demodulation of user 2 is now more accurate since the interference from user 1 is removed. The demodulated signal d₂ from user 2 is stored in the further memory means 48 of the signal reconstruction means 47.

Next, the desired user 3 is considered. Proper third weighing factors gₖ(3) are determined by the control means 49 such that these third weighing factors represent a conceptual antenna pattern with a main beam towards user 3 and all other users 1, 2 and 4 being suppressed as good as possible, and fed to the signal weighing means 44 and the signal reconstruction means 47. In the signal weighing means 44 the total signal of the antenna elements 41ₖ is weighted to favour user 3, resulting in the third radio signal s₃. Now the demodulated signals d₁ and d₂ of users 1 and 2 are reconstructed assuming the third weighing factors gₖ(3). The signal to be removed is the accumulation from the reconstructed signals from users 1 and 2. This interfering signal is removed from the total signal, resulting in a corrected third radio signal s'₃ and is demodulated by the demodulation means 45, resulting in the intended demodulated user signal d₃ at the output 39 of the unit 40.

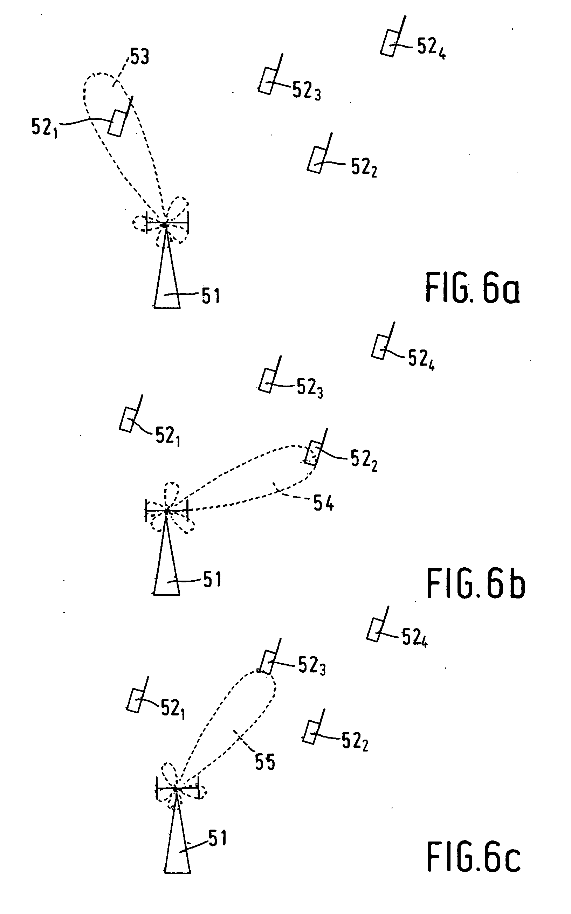

Fig. 6a, Fig. 6b and Fig. 6c, schematically show how the effective or conceptual antenna patterns 53, 54 and 55 for gₖ(1), gₖ(2) and gₖ(3), respectively, look like. Note that the patterns in Figs. 6a, 6b and 6c are not physically implemented, but would result from the weight settings gₖ(i) in the digital processing unit 40.

Since the intended user 3 has been demodulated, the procedure could stop here. However, for more accurate detection, the procedure can continue. First, the last interferer user 4 (although weaker) can be demodulated, with new weights gₖ(4) but further the same signal processing as disclosed above. Then, the successive procedure can start all over again. Again gₖ(1) can be applied, which may be updated if after the demodulation process more accurate results have been obtained. But now, the contributions of the (weaker but still interfering) users 2, 3 and 4 can be removed before the signal of user 1 is demodulated by the demodulation means 45, rendering an even better estimate of the user 1 signal. The process can continue for user 2 with removing the contributions from users 1, 3 and 4, etc. This procedure can iterate for several times until no noticeable improvements are made.

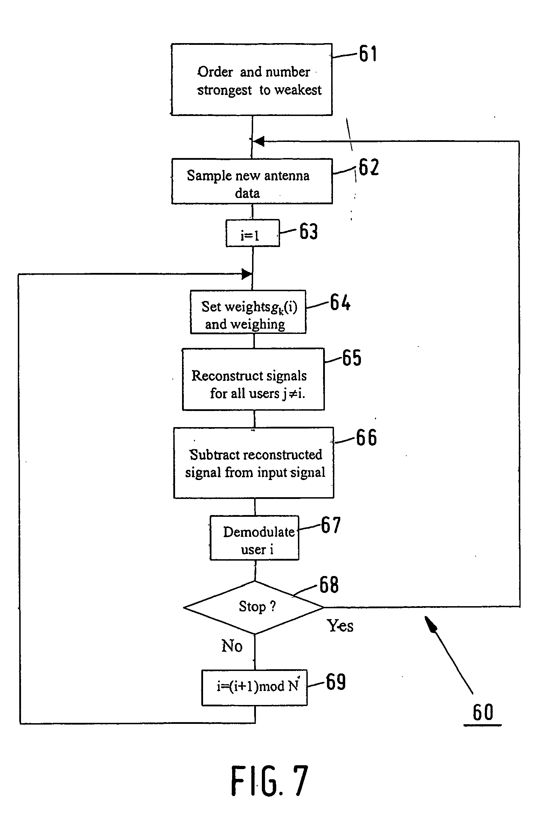

The entire procedure of subtractive cancellation for SDMA in accordance with the present invention as disclosed above, is illustrated by the flow chart diagram 60 in Fig. 7. The normal flow is from top to bottom. Here, N users are assumed.

First, in block 61, the obtained radio signals are ordered from strongest to weakest. If available, new antenna data as to the tracking of mobile radio communication are acquired in block 62. For the strongest user, user i=1, block 63, initially the first weighing factors gₖ(1) are retrieved and applied in block 64 to the antenna signals obtained, resulting in the first radio signal S₁. This first radio signal is directly demodulated, d₁, and stored in block 67. This, because initially there are no signals available for correction.

Next, block 69, i=(i+1) mod N results in i=2, and the steps in block 64 will be applied for user 2, using second weighing factors gₖ(2) which results in the second radio signal S₂. Now, in block 65, the demodulated first radio signal d₁ will be reconstructed and weighed by the second weighing factors for subtraction 66 from the second radio signal S₂. This results in a corrected second radio signal s'₂ for the second user or second radio communication unit. The corrected second radio signal S'₂ is demodulated, block 67, providing the demodulated second signal d₂, and stored.

The process is continued for i=3, ... , N, until the conditions for "stop", block 68, have been satisfied. These can be, among others:
- the desired user has been demodulated once;
- the desired user has been detected with sufficient accuracy;
- processing time has expired to continue the iteration process.

Notice, that this is all digital signal processing, carried out "off line," on the signals stored in the input memory 42 (Fig. 4). With high-speed processors, this can all be carried out at fast rates. The processed signal part that is demodulated at once can be a symbol, a sequence of symbols, an entire frame, or a number of frames of a radio signal.

Although in the above the first, second, and further corrected radio signals have been demodulated by demodulation means 45, this demodulation step need not necessarily be carried out in the signal processing unit 40 for applying the present invention. When storing the weighed radio signals, the reconstruction means may be omitted and the corrected signals s'₁ are stored directly in the further memory means 48.

Those skilled in the art are aware of how to build or program digital signal processing means for providing reconstruction, demodulation and control means for selecting weighing factors, as disclosed above. For the proper understanding of the present invention, no further details need to be provided here.

The present invention can be used with several types of radio communication systems, and is not restricted to the preferred embodiment disclosed above, Persons skilled in the art may modify, enhance or replace parts of the steps and means of the invention, as disclosed above. All these modifications, enhancements and replacements are construed to be incorporated by the appended claims.

## Claims

1. A method of interference cancellation in radio communication signals received by a radio access unit (51) of a radio communication system (50), said radio access unit (51) comprising receiver means and antenna means, said antenna means having a plurality of directionally separated antenna elements (41) for adaptively receiving radio communication signals transmitted by a plurality of remote radio communication units (52), said method comprising the step of
a) obtaining (62) radio signals received by each of said antenna elements (41), wherein said method is **characterized by** the further steps of:
b) determining (64) first weighing factors for selecting radio signals of a first radio communication unit (52₁) among said radio signals obtained in step a);
c) weighing (64) said radio signals obtained in step a) by said first weighing factors providing a first radio signal of said first radio communication unit (52₁);
d) determining (64) second weighing factors for selecting radio signals of a second radio communication unit (52₂) among said radio signals obtained in step a);
e) weighing (64) said radio signals obtained in step a) by said second weighing factors providing a second radio signal of said second radio communication unit (52₂);
f) subtracting (66) from said second radio signal provided in step e) said first radio signal provided in step c) weighed (65) by said second weighing factors, providing a corrected second radio signal, and
g) repeating steps d) to f) for a further radio communication unit (52) by determining (64) further weighing factors, providing a further radio signal of said further radio communication unit (52) and providing a corrected further radio signal by each time subtracting (66) from said further radio signal said previously obtained corrected radio signals weighed (65) by said further weighing factors, till a stop criterium (68) has been satisfied.

2. A method according to Claim 1, wherein said weighing factors are determined to represent conceptual antenna patterns (53; 54; 55) with said plurality of directionally separated antenna elements (41).

3. A method according to any of the previous claims, wherein said weighing factors are determined for selecting radio signals of a respective radio communication unit and for suppressing radio signals corresponding to any other radio communication unit.

4. A method according to any of the previous claims, wherein said radio signals obtained in step a) are ordered (61) from strongest to weakest according to receive signal strength, and wherein said first, second and further radio communication units are selected in descending order of receive signal strength.

5. A method according to any of the previous claims, wherein said first, second and further corrected radio signals are demodulated (45; 67) into first, second and further demodulated signals, respectively, and stored in storage means (48), and wherein for providing said corrected radio signals said demodulated signals are reconstructed (47) into corresponding radio signals.

6. A method according to any of the Claims 3, 4 or 5 dependent on Claim 3, wherein said stop criterium includes stopping of step g) once a corrected radio signal has been provided corresponding to a radio communication unit of interest.

7. A method according to any of the Claims 1, 2, 3, 4 or 5, wherein said stop criterium includes repetition of step g) for said first, second and further radio communication units till said interference cancellation in said first, second and further radio signals between successive repetitions of step g) drops below a set value.

8. A method according to any of the Claims 1, 2, 3, 4, 5 or 7, wherein said stop criterium includes repetition of step g) for said first, second and further radio communication units during a set time period.

9. A method according to any of the previous claims, wherein said radio signals obtained in step a) are digitized and said steps b) to d) are performed in the digital domain by digital signal processing means.

10. A method according to any of the previous claims, wherein said demodulation (45; 67) and reconstruction (47) are performed in the digital domain by digital signal processing means (40).

11. A signal processing device (40) for interference cancellation in radio communication signals received by a radio access unit (51) of a radio communication system (50), said radio access unit (51) comprising receiver means and antenna means, said antenna means having a plurality of directionally separated antenna elements (41) for adaptively receiving radio communication signals transmitted by a plurality of remote radio communication units (52), said device comprising
- means (42) for storing radio signals received by each of said antenna elements (41), and **characterized by**:
- means (49) for determining respective weighing factors for selecting radio signals of a respective radio communication unit (52) among said stored radio signals;
- means (44) for weighing said stored radio signals by said respective weighing factors for providing a respective radio signal of said respective radio communication unit (52); and
- means (46, 47) for subtracting from said respective radio signal previously determined corrected radio signals of radio communication units weighed by said respective weighing factors, for providing a corrected respective radio signal.

12. A device according to Claim 11, wherein said means (49) for determining respective weighing factors are arranged to represent conceptual antenna patterns (53; 54; 55) with said plurality of directionally separated antenna elements (41).

13. A device according to Claim 11 or 12, wherein said means (49) for determining said respective weighing factors are arranged for selecting radio signals of a respective radio communication unit and for suppressing radio signals corresponding to any other radio communication unit.

14. A device according to Claim 11, 12 or 13, further comprising means (43) for measuring signal strength of said stored radio signals, and means for ordering stored radio signals from strongest to weakest according to receive signal strength, and control means (49) for processing said ordered radio signals in descending order of receive signal strength.

15. A device according to Claim 11, 12, 13 or 14, comprising means (45) for demodulating said respective corrected radio signals, further means (48) for storing said demodulated signals, and means (47) for reconstructing said demodulated signals providing corrected radio signals for weighing by said weighing means.

16. A device according to any of the Claims 11, 12, 13, 14 or 15, comprising means arranged for stopping signal processing in accordance with a stopping criterium, comprising:
- means for stopping signal processing once a corrected radio signal has been provided corresponding to a radio communication unit of interest,
- means for stopping signal processing till said interference cancellation, between successive repetitions of providing a corrected respective radio signal, drops below a set value, or
- means for stopping signal processing after a set time period lapsed.

17. A device according to any of the Claims 11, 12, 13, 14, 15 or 16, comprising analog to digital conversion means for digitizing said stored radio signals, and said means (43-49) are digital signal processing means.

18. A radio access unit (51) for use in a radio communication system (50), said radio communication system (50) comprising a plurality of remote radio communication units (52) and at least one radio access unit (51), said radio access unit (51) comprising a device (40) according to any of the Claims 11-17.

19. A radio communication system (50), comprising a plurality of remote radio communication units (52) and at least one radio access unit (51) in accordance with Claim 18.

## Patentansprüche

1. Verfahren der Störungsunterdrückung in Funkkommunikationssignalen, die durch eine Funkzugriffseinheit (51) eines Funkkommunikationssystems (50) empfangen werden, wobei die Funkzugriffseinheit (51) Empfangsmittel und Antennenmittel umfasst, wobei das Antennenmittel eine Vielzahl von direktional unterteilten Antennenelementen (41) aufweist zum adaptiven Empfangen von Funkkommunikationssignalen, die von einer Vielzahl von entfernten Funkkommunikationseinheiten (52) gesendet werden, wobei das Verfahren die Schritte umfasst:
a) Erlangen (62) von Funksignalen, die von jeder der Antennenelemente (41) empfangen werden, wobei das Verfahren durch die weiteren Schritte **gekennzeichnet** ist:
b) Bestimmen (64) eines ersten Gewichtungsfaktors zum Auswählen von Funksignalen einer ersten Funkkommunikationseinheit (52₁) unter den Funksignalen, die in Schritt a) erlangt werden;
c) Gewichten (64) der Funksignale, die in Schritt a) erlangt wurden, mit den ersten Gewichtungsfaktoren, was ein erstes Funksignal der ersten Kommunikationseinheit (52₁) bereitstellt;
d) Bestimmen (64) von zweiten Gewichtungsfaktoren zum Auswählen von Funksignalen einer zweiten Funkkommunikationseinheit (52₂) unter den Funksignalen, die in Schritt a) erlangt werden;
e) Gewichten (64) der Funksignale, die in Schritt a) erlangt wurden, mit den zweiten Gewichtungsfaktoren, was ein zweites Funksignal der zweiten Funkkommunikationseinheit (52₂) bereitstellt;
f) Subtrahieren (66) von dem zweiten Funksignal, das in Schritt e) bereitgestellt wird, das erste Funksignal, das in Schritt c) bereitgestellt wird, gewichtet (65) mit dem zweiten Gewichtungsfaktor, was ein korrigiertes zweites Funksignal bereitstellt, und
g) Wiederholen der Schritte d) bis f) für eine weitere Funkkommunikationseinheit (52) durch Bestimmen (64) weiterer Gewichtungsfaktoren, was ein weiteres Funksignal der weiteren Funkkommunikationseinheit (52) bereitstellt und, was ein korrigiertes weiteres Funksignal bereitstellt durch jedes Mal Subtrahieren (66), von dem weiteren Funksignal, die der zuvor erlangten korrigierten Funksignale, gewichtet (65) mit den weiteren Gewichtungsfaktoren, bis ein Stoppkriterium (68) erfüllt wird.

2. Verfahren nach Anspruch 1, wobei die Gewichtungsfaktoren bestimmt werden, um konzeptionelle Antennenmuster (53; 54; 55) mit der Vielzahl von direktional unterteilten Antennenelementen (41) darzustellen.

3. Verfahren nach einem der vorangegangenen Ansprüche, wobei die Gewichtungsfaktoren bestimmt werden zum Auswählen von Funksignalen einer jeweiligen Funkkommunikationseinheit und zum Unterdrücken von Funksignalen entsprechend jeder anderen Funkkommunikationseinheit.

4. Verfahren nach einem der vorangegangenen Ansprüche, wobei die Funksignale, die in Schritt a) erlangt werden, geordnet werden (61) vom Stärksten zum Schwächsten entsprechend der Empfangssignalstärke, und wobei die erste, zweite und weitere Funkkomunikationseinheiten ausgewählt werden in absteigender Reihenfolge der Empfangssignalstärke.

5. Verfahren nach einem der vorangegangenen Ansprüche, wobei die ersten, zweiten und weiteren korrigierten Funksignale in erste, zweite bzw. weitere demodulierte Signale demoduliert (45; 67) werden, und in Speichermittel (48) gespeichert werden, und wobei, zum Bereitstellen der korrigierten Funksignale, die demodulierten Signale in entsprechende Funksignale rekonstruiert (47) werden.

6. Verfahren nach einem der Ansprüche 3, 4 oder 5, abhängig von Anspruch 3, wobei das Stoppkriterium beinhaltet Stoppen von Schritt g), sobald ein korrigiertes Funksignal bereitgestellt wurde, entsprechend einer Funkkomunikationseinheit von Interesse.

7. Verfahren nach einem der Ansprüche 1, 2, 3, 4 oder 5, wobei das Stoppkriterium beinhaltet Wiederholen von Schritt g) für die erste, zweite und weitere Funkkomunikationseinheiten bis die Störungsunterdrückung in den ersten, zweiten und weiteren Funksignalen zwischen nacheinander folgenden Wiederholungen von Schritt g) unter einen gesetzten Wert fällt.

8. Verfahren nach einem der Ansprüche 1, 2, 3, 4, 5 oder 7, wobei das Stoppkriterium beinhaltet Wiederholen von Schritt g) für die erste, zweite und weitere Funkkomunikationseinheiten während einer gesetzten Zeitperiode.

9. Verfahren nach einem der vorangegangenen Ansprüche, wobei die Funksignale, die in Schritt a) erlangt werden, digitalisiert werden und die Schritte b) bis d) in dem digitalen Bereich durch Digitalsignalverarbeitungsmittel (40) durchgeführt werden.

10. Verfahren nach einem der vorangegangenen Ansprüche, wobei die Demodulation (45; 67) und Rekonstruktion (47) in dem digitalen Bereich durch Digitalsignalverarbeitungsmittel (40) durchgeführt werden.

11. Signalverarbeitungsgerät (40) zur Störungsunterdrückung in Funkkommunikationssignalen, die durch eine Funkzugriffseinheit (51) eines Funkkomunikationssystems (50) empfangen werden, wobei die Funkzugriffseinheit (51) Empfangsmittel und Antennenmittel umfasst, wobei das Antennenmittel eine Vielzahl von direktional unterteilten Antennenelementen (41) zum adaptiven Empfangen von Funkkommunikationssignalen aufweist, die durch eine Vielzahl von entfernten Funkkomunikationseinheiten (52) gesendet werden, wobei das Gerät umfasst:
- Mittel (42) zum Speichern von Funksignalen, empfangen durch jede der Antennenelemente (41), **gekennzeichnet durch**:
- Mittel (49) zum Bestimmen jeweiliger Gewichtungsfaktoren für ausgewählte Funksignale einer jeweiligen Funkkommunikationseinheit (52) unter den gespeicherten Funksignalen;
- Mittel (44) zum Gewichten der gespeicherten Funksignale mit den jeweiligen Gewichtungsfaktoren zum Bereitstellen eines jeweiligen Funksignals der jeweiligen Funkkomunikationseinheit (52); und
- Mittel (46, 47) zum Subtrahieren, von dem jeweiligen Funksignal, zuvor bestimmter korrigierter Funksignale von Funkkomunikationseinheiten gewichtet mit den jeweiligen Gewichtungsfaktoren, zum Bereitstellen eines korrigierten jeweiligen Funksignals.

12. Gerät nach Anspruch 11, wobei die Mittel (49) zum Bestimmen jeweiliger Gewichtungsfaktoren eingerichtet sind, um konzeptionelle Antennenmuster (53, 54, 55) mit der Vielzahl von direktional unterteilten Antennenelementen (41) darzustellen.

13. Gerät nach Anspruch 11 oder 12, wobei die Mittel (49) zum Bestimmen der jeweiligen Gewichtungsfaktoren eingerichtet sind zum Auswählen von Funksignalen einer jeweiligen Funkkommunikationseinheit und zum Unterdrücken von Funksignalen entsprechend jeder anderen Funkkommunikationseinheit.

14. Gerät nach Anspruch 11, 12 oder 13, ferner umfassend Mittel (43) zum Messen von Signalstärke der gespeicherten Funksignale, und Mittel zum Ordnen von gespeicherten Funksignalen von Stärkstem zu Schwächstem gemäß der Empfangssignalstärke, und Steuermittel (49) zum Verarbeiten der geordneten Funksignale in absteigender Reihenfolge der Empfangssignalstärke.

15. Gerät nach Anspruch 11, 12, 13 oder 14, umfassend Mittel (45) zum Demodulieren der jeweiligen korrigierten Funksignale, weitere Mittel (48) zum Speichern des demodulierten Signale, und Mittel (47) zum Rekonstruieren der demodulierten Signale, was korrigierte Funksignale bereitstellt zum Gewichten durch das Gewichtungsmittel.

16. Gerät nach einem der Ansprüche 11, 12, 13, 14 oder 15, umfassend Mittel angeordnet zum Stoppen von Signalverarbeitung in Übereinstimmung mit einem Stoppkriterium, umfassend:
- Mittel zum Stoppen von Signalverarbeitung sobald ein korrigiertes Funksignal entsprechend einer Funkkommunikationseinheit von Interesse bereitgestellt wurde,
- Mittel zum Stoppen von Signalverarbeitung bis die Störungsunterdrückung, zwischen aufeinander folgenden Wiederholungen des Bereitstellens eines korrigierten entsprechenden Funksignals, unter einen gesetzten Wert fällt, oder
- Mittel zum Stoppen von Signalverarbeitung nachdem eine gesetzte Zeitperiode abgelaufen ist.

17. Gerät nach einem der Ansprüche 11, 12, 13, 14, 15 oder 16, umfassend Analogzu Digitalumwandlungsmittel zum Digitalisieren der gespeicherten Funksignale, und wobei die Mittel (43-49) Digitalsignalverarbeitungsmittel sind.

18. Funkzugriffseinheit (51) zur Verwendung in einem Funkkommunikationssystem (50), wobei das Funkkommunikationssystem (50) eine Vielzahl von entfernten Funkkommunikationseinheiten (52) und mindestens eine Funkzugriffseinheit (51) umfasst, wobei die Funkzugriffseinheit (51) ein Gerät (40) nach einem der Ansprüche 11 bis 17 umfasst.

19. Funkkommunikationssystem (50), umfassend eine Vielzahl von entfernten Funkkommunikationseinheiten (52) und mindestens eine Funkzugriffseinheit (51) in Übereinstimmung mit Anspruch 18.

## Revendications

1. Procédé d'annulation des interférences dans des signaux de communication radio reçus par une unité d'accès radio (51) d'un système de communication radio (50), ladite unité d'accès radio (51) comprenant un moyen récepteur et un moyen d'antenne, ledit moyen d'antenne comprenant une pluralité d'éléments d'antenne (41) séparés dans leurs directions, destinés à recevoir de manière adaptative des signaux de communication radio émis par une pluralité d'unités de communication radio distantes (52), ledit procédé comprenant l'étape consistant à :
a) obtenir (62) des signaux radio reçus par chacun desdits éléments d'antenne (41), ledit procédé étant **caractérisé par** les étapes consistant en outre à :
b) déterminer (64) des premiers facteurs de pondération destinés à sélectionner des signaux radio d'une première unité de communication radio (52₁), parmi lesdits signaux radio obtenus à l'étape a) ;
c) pondérer (64) lesdits signaux radio obtenus à l'étape a), à l'aide desdits premiers facteurs de pondération, pour donner un premier signal radio de ladite première unité de communication radio (52₁);
d) déterminer (64) des seconds facteurs de pondération destinés à sélectionner des signaux radio d'une deuxième unité de communication radio (52₂), parmi lesdits signaux radio obtenus à l'étape a) ;
e) pondérer (64) lesdits signaux radio obtenus à l'étape a), à l'aide desdits seconds facteurs de pondération, pour donner un second signal radio de ladite deuxième unité de communication radio (52₂) ;
f) soustraire (66) dudit second signal radio fourni à l'étape e) ledit premier signal radio fourni à l'étape c) pondéré (65) par lesdits seconds facteurs de pondération, pour donner un second signal radio corrigé ; et
g) répéter les étapes d) à f) pour une unité de communication radio (52) supplémentaire en déterminant (64) des facteurs de pondération supplémentaires, pour donner un signal radio supplémentaire de ladite unité de communication radio (52) supplémentaire et pour donner un signal radio corrigé supplémentaire à chaque fois en soustrayant (66) dudit signal radio supplémentaire lesdits signaux radio corrigés obtenus précédemment, pondérés (65) par lesdits facteurs de pondération supplémentaires, jusqu'à ce qu'un critère d'interruption (68) soit satisfait.

2. Procédé selon la revendication 1, dans lequel lesdits facteurs de pondération sont déterminés afin de représenter des diagrammes de rayonnement conceptuels (53 ; 54 ; 55) à l'aide de ladite pluralité d'éléments d'antenne (41) séparés dans leurs directions.

3. Procédé selon l'une quelconque des revendications précédentes, dans lequel lesdits facteurs de pondération sont déterminés pour sélectionner des signaux radio d'une unité de communication radio respective et pour supprimer des signaux radio correspondant à toute autre unité de communication radio.

4. Procédé selon l'une quelconque des revendications précédentes, dans lequel lesdits signaux radio obtenus à l'étape a) sont classés (61) du plus puissant au plus faible en fonction de l'intensité du signal reçu, et dans lequel lesdites, première, deuxième et suivante, unités de communication radio sont sélectionnées dans l'ordre décroissant de l'intensité du signal reçu.

5. Procédé selon l'une quelconque des revendications précédentes, dans lequel lesdits, premier, deuxième et suivant, signaux radio corrigés sont démodulés (45 ; 67) pour donner des premier, deuxième et suivant signaux démodulés, respectivement, et sont stockés dans un moyen de stockage (48), et dans lequel, afin de fournir lesdits signaux radio corrigés, lesdits signaux démodulés sont reconstitués (47) pour donner des signaux radio correspondants.

6. Procédé selon l'une quelconque des revendications 3, 4 ou 5 lorsqu'elle dépend de la revendication 3, dans lequel ledit critère d'interruption comprend l'interruption de l'étape g) lorsqu'un signal radio corrigé, correspondant à une unité de communication radio intéressante, a été fourni.

7. Procédé selon l'une quelconque des revendications 1, 2, 3, 4 ou 5, dans lequel ledit critère d'interruption comprend la répétition de l'étape g) pour lesdites, première, deuxième et suivante, unités de communication radio jusqu'à ce que ladite annulation des interférences dans lesdits, premier, deuxième et suivant, signaux radio entre des répétitions successives de l'étape g), chute au-dessous d'une valeur prédéterminée.

8. Procédé selon l'une quelconque des revendications 1, 2, 3, 4, 5 ou 7, dans lequel ledit critère d'interruption comprend la répétition de l'étape g) pour lesdites, première, deuxième et suivante, unités de communication pendant une période de temps prédéterminée.

9. Procédé selon l'une quelconque des revendications précédentes, dans lequel lesdits signaux radio obtenus à l'étape a) sont numérisés et lesdites étapes b) à d) sont effectuées dans le domaine numérique à l'aide d'un moyen de traitement du signal numérique.

10. Procédé selon l'une quelconque des revendications précédentes, dans lequel ladite démodulation (45 ; 67) et ladite reconstitution (47) sont effectuées dans le domaine numérique par ledit moyen de traitement du signal numérique (40).

11. Dispositif de traitement du signal (40), destiné à annuler des interférences dans des signaux de communication radio reçus par une unité d'accès radio (51) d'un système de communication radio (50), ladite unité d'accès radio (51) comprenant un moyen récepteur et un moyen d'antenne, ledit moyen d'antenne comprenant une pluralité d'éléments d'antenne (41) séparés dans leurs directions, destinés à recevoir de manière adaptative des signaux de communication radio émis par une pluralité d'unités de communication radio distantes (52), ledit dispositif comprenant :
- un moyen (42) destiné à stocker des signaux radio reçus par chacun des éléments d'antenne (41) ;
et étant **caractérisé par** :
- un moyen (49) destiné à déterminer des facteurs de pondération respectifs destinés à sélectionner des signaux radio d'une unité de communication radio (52) respective, parmi lesdits signaux radio stockés ;
- un moyen (44) destiné à pondérer lesdits signaux radio stockés, à l'aide desdits facteurs de pondération respectifs, pour donner un signal radio respectif de ladite unité de communication radio (52) respective ; et
- un moyen (46, 47) destiné à soustraire dudit signal radio respectif des signaux radio corrigés, déterminés précédemment et pondérés par lesdits facteurs de pondération respectifs, pour donner un signal radio corrigé respectif.

12. Dispositif selon la revendication 11, dans lequel ledit moyen (49) destiné à déterminer des facteurs de pondération respectifs est conçu pour représenter des diagrammes de rayonnement conceptuels (53 ; 54 ; 55) à l'aide de ladite pluralité d'éléments d'antenne (41) séparés dans leurs directions.

13. Dispositif selon la revendication 11 ou 12, dans lequel ledit moyen (49) destiné à déterminer lesdits facteurs de pondération respectifs est conçu pour sélectionner des signaux radio d'une unité de communication radio respective et pour supprimer des signaux radio correspondant à toute autre unité de communication radio.

14. Dispositif selon la revendication 11, 12 ou 13, comprenant en outre un moyen (43) destiné à mesurer l'intensité desdits signaux radio stockés, un moyen destiné à classer des signaux radio stockés du plus puissant au plus faible, en fonction de l'intensité du signal reçu, et un moyen de commande (49) destiné à traiter lesdits signaux radio ordonnés dans l'ordre décroissant de l'intensité du signal reçu.

15. Dispositif selon la revendication 11, 12, 13 ou 14, comprenant un moyen (45) destiné à démoduler lesdits signaux radio corrigés respectifs, un autre moyen (48) destiné à stocker lesdits signaux démodulés, et un moyen (47) destiné à reconstituer lesdits signaux démodulés pour donner des signaux radio corrigés à pondérer par ledit moyen de pondération.

16. Dispositif selon l'une quelconque des revendications 11, 12, 13, 14 ou 15, comprenant un moyen conçu pour interrompre le traitement des signaux en fonction d'un critère d'interruption, comprenant :
- un moyen destiné à interrompre le traitement du signal lorsqu'un signal radio corrigé, correspondant à une unité de communication radio intéressante, a été fourni ;
- un moyen destiné à interrompre le traitement du signal lorsque ladite annulation des interférences, entre des répétitions successives de la fourniture d'un signal radio corrigé respectif, chute au-dessous d'une valeur prédéterminée ; ou
- un moyen destiné à interrompre le traitement du signal après écoulement d'une période de temps prédéterminée.

17. Dispositif selon l'une quelconque des revendications 11, 12, 13, 14, 15 ou 16, comprenant un moyen de conversion analogique-numérique afin de numériser lesdits signaux radio stockés, et dans lequel lesdits moyens (43 à 49) sont des moyens de traitement du signal numérique.

18. Unité d'accès radio (51) destinée à être utilisée dans un système de communication radio (50), ledit système de communication radio (50) comprenant une pluralité d'unités de communication radio distantes (52) et au moins une unité d'accès radio (51), ladite unité d'accès radio (51) comprenant un dispositif (40) selon l'une quelconque des revendications 11 à 17.

19. Système de communication radio (50) comprenant une pluralité d'unités de communication radio distantes (52) et au moins une unité d'accès radio (51) selon la revendication 18.
